# EUROPEAN PATENT APPLICATION

(11) **EP 1 465 190 A2**
(43) Date of publication of application: **06.10.2004**
(21) Application number: 04008492.3
(22) Date of filing: 15.06.2000
(51) Int. Cl.: G11B 21/12

(54) **Card-type magnetic recording device**

(30) Priority: 18.06.1999 JP 17281299; 18.06.1999 JP 17283899
(62) Divisional of application: 00939076.6
(71) Applicant: IOMEGA CORPORATION, Roy, Utah 84067 (US); Citizen Watch Co. Ltd., Tokyo 188-8511 (JP)
(72) Inventor: Wakita, Maki, Nishitokyo-shi Tokyo 188-8511 (JP); Katsutoshi, Mukaijima, Nishitokyo-shi Tokyo 188-8511 (JP); Shoji, Takahashi, Nishitokyo-shi Tokyo 188-8511 (JP)
(74) Representative: Mounteney, Simon James

(57) **Abstract**

In a card-type magnetic recording device (1), a head arm (14) adopts a swing arm structure in the shape of a flat plate. The head arm (14) has a guide arm (27) projecting toward the side opposite to a disk (2) and is arranged at a distance from a load ramp (15). The projecting end (29) of the guide arm (27) remains behind the load ramp (15) at a position where the end mounted with the head (26) in the head arm (14) is disengaged from the load ramp (15).

## Description

### TECHNICAL FIELD

This invention relates to a card-type magnetic recording device, which is mounted to information equipment such as a personal computer for readout or input of information from or to the information equipment.

### BACKGROUND ART

Insertion of a card-type magnetic recording device such as a PC card into a slot of a personal computer for readout or input of information from or to the magnetic recording device permits the personal computer to provide additional functions and also to increase a processing data capacity.

A shell of a cartridge formed by housing a disk-shaped recording medium (which will be hereinafter referred to as a disk) in the shell is inserted into the card-type magnetic recording device through an insertion opening detachably. A shutter of the shell is opened to expose a head to the outside through the operation of inserting the cartridge into the card-type magnetic recording device through the insertion opening. As a result, the head gains access to the exposed disk-recording surface for recording or reading of information to or from the disk.

The head makes movement between an access position for reading or writing of information from or to the disk in contact with or at slight distance from the disk after movement of the head onto the surface of the disk and a retreat position for support of the head with a load ramp on termination of reading or writing of information. Incidentally, when the opposite surfaces of the disk are available, the head gains access to the upper and lower surfaces of the disk.

In case of HDD (hard disk drive), the head is mounted to the end of a head arm of swing arm structure permitting swing motions about an axial portion of a base part. On the other hand, in case of FDD (floppy disk drive), the head is mounted to a movable body actuated in a radial direction. In either case, the head is supported with the load ramp at the retreat position after being moved thereto, when there is no need for reading or writing of information from or to the disk.

A description will now be given of the positional relationship among the head, the disk and the load ramp. In HDD, since the disk is in a fixed location at all times and thus requires neither insertion into the magnetic recording device nor removal from the magnetic recording device, the load ramp is located on the surface of the disk in overhang arrangement (Refer to Figs. 4A to 4C of US Patent No. 4,933,785 (or its corresponding Japanese Toku-hyo No. 3-503101)) to permit no gap between the end of the load ramp and the periphery of the disk when the head is moved from the retreat position to the access position, or on the contrary, returned from the access position to the retreat position.

However, in FDD, since there is a need for insertion or removal of the disk into or from the magnetic recording device, it is difficult to locate the load ramp on the surface area (the head access position) of the disk in overhang arrangement. That is, a special means is required for preventing the peripheral edge of the disk inserted into the magnetic recording device through the insertion opening from coming into collision with the load ramp.

In this connection, there is proposed a technique related to a load ramp having a structure which is opened upward and downward to accept the disk in advancement of the disk toward the load ramp and is then closed to guide the head smoothly to the surface area of the disk in movement of the head from the retreat position to the access position (Refer to U.S. Patent No. 5,995,332). However, since the opening/closing structure of the load ramp is complicated, there is a drawback to the use of this load ramp under the dimensionally limited environment (in respect of a thickness particularly) such as the PC card.

When a PC card based on PCMCIA standard Type II is in use, its dimensions (width x length x thickness) are regulated to be 54.0 mm in width, 85.60 mm in length and 5.0 mm in thickness, and a lower stage part is also regulated to have a thickness of 3.30 mm.

The above dimensions are considered to be values remarkably severe on a magnetic recording device, which has a movable part such as a head arm and a disk drive motor on the inside and also requires a mechanism for insertion and removal of the cartridge of the disk, while being allowed to ensure a structural strength.

Under the above conditions, each component is strictly limited as to the form (in respect of a thickness particularly) and the dimensional accuracy or positional relationship, otherwise a slight difference in dimension may affect greatly the other portions in some cases.

The same may be said of the head arm which carries a recording/reproducing head, and the head arm which carries designed as small as possible while maintaining its primary functions is required. Most head arms are of a type permitting pivotal motions about an axis of the base part and have a shock-absorbing flat spring material called a gimbal spring fixed at its end to fix the head to the flat spring material by bonding or the like. One end of the gimbal spring is engaged with an engagement hole formed at the end of the head arm, and the other end thereof is fixed to a portion at the rear of the end of the head arm, resulting in prevention of unnecessary vibrations. However, the dimensional limitation as described above makes it impossible to lengthen the end portion of the gimbal spring engaged with the engagement hole of the head arm at random. Thus, even though the head arm maintains stability normally in the state of being supported with the load ramp at the retreat position, usually available somewhat great shocks cause elastic deformation of the gimbal spring as being pivoted in the thickness direction of the head arm, resulting in a possibility that the end of the gimbal spring may be disengaged from the engagement hole of the head arm.

While a synthetic resin molded product is often available for the load ramp, a large thickness is required for the load ramp in consideration of keeping of the form and installation strength, and a support part for guiding the arm is formed in a flat shape.

### DISCLOSURE OF THE INVENTION

It is an object of the present invention to provide a card-type magnetic recording device, which makes it possible to mount a disk to the inside under the requirements of dimensions restricted within narrow limits, permits a head arm to be moved smoothly between a position for access of the head arm to the disk and a position for retreat of the head arm from the disk, and further has the head arm resistant to shocks.

To attain the above object, in a card-type magnetic recording device according to the present invention, a head arm, to which a head is mounted, is formed in a flat plate-like shape and adopts a swing arm structure permitting swing motions about an axis of a base part, while a load ramp is arranged at a distance from the peripheral edge of the disk.

The head arm meeting both the flat plate-like shape requirement and the swing arm structure requirement permits less vertical dimensions of the head arm, resulting in less thickness of the card-type magnetic recording device. Further, since the load ramp is arranged at a distance from the peripheral edge of the disk, the disk may be installed at its set position without hindrance.

There is provided a guide means for guiding smoothly the head making movement between the load ramp and the periphery of the disk. The guide means makes it possible to prevent the head arm from falling in a gap between the load ramp and the disk. It is required that the guide means should keep high the end of head arm moving through the above gap portion without being inclined largely. The guide means may be provided on the head arm or a frame plate axially supporting the head arm or between the head arm and the load ramp.

The card-type magnetic recording device comprises a head arm of swing arm structure, a motor, a load ramp and an information processor. The head arm carries a magnetic recording/reproducing head at its end. The motor revolves the disk serving as a recording medium for recording of information. The load ramp permits the head to stand ready for movement to the next access position after retreat of the head from the surface area of the disk with the end of the head arm supported, while permitting the head to be moved smoothly to the disk surface.

The head arm has a guide arm. The guide arm is provided to the guide arm on a position at a short distance from the end where a head is mounted toward intermediate portion in the longitudinal direction in a manner such that the guide arm projects toward the side opposite to the disk

The head arm and the load ramp need a structure having the following relation. In a position of disengagement of the head arm end mounted with the head from the load ramp, the projecting end of the guide arm remains behind the load ramp, resulting in maintenance of the head arm end at an isolation position permitting no contact of the head with the disk until the guide arm is disengaged from the load ramp.

Incidentally, the head and the head arm are of normally available structure. The head arm is pivoted about a base end opposite to the end mounted with the head and also shows spring performance for urging the head toward the surface of the disk. Further, the head arm is normally arranged face to face with the opposite surfaces of the disk so as to gain access to the opposite surfaces of the disk. According to this configuration, while the projecting end of the guide arm remains behind the load ramp to maintain the head arm end at the isolation position permitting no contact of the head with the disk, the head at the end of the head arm may be moved to the surface area of the disk, resulting in smooth movement of the head from the load ramp to the disk.

A taper-surface beginning position of a support part may be located closer to the disk than a taper-surface beginning position of a rail part in some cases. According to this configuration, the support part permits the head to maintain higher in movement of the head from the retreat position to the access position, resulting in less possibility that the end of the head arm may fall in the gap between the load ramp and the peripheral edge of the disk. On the other hand, the guide arm makes contact with a taper surface of small inclination in movement of the head from the access position to the retreat position. Thus, the guide arm may easily ride onto such a taper surface for guiding the head smoothly toward the retreat position.

The load ramp is structured to have a support part for supporting the end of the head arm and a rail part for supporting the end of the guide arm, and the ends of the support part and the rail part on the side of a disk may have a taper surface inclined toward the disk, serving as a head arm guide part, respectively. According to this configuration, the end of the head arm is supported with the rail part even for the duration of movement, resulting in stable movement of the head arm.

The projecting end of the guide arm is located closer to the inner side of the head arm than the end of the head arm, while maintaining a difference in altitude with respect to the end of the head arm, and the same difference in altitude as the above difference is provided between the support part and the rail part in the load ramp correspondingly to the above difference. According to this configuration, since the guide arm may make contact with the rail part of the load ramp in a portion closer to the disk than the end of the head arm to move the head to the surface area of the disk in the state of being brought closer to the disk surface, upward and downward movements of the head after being brought closer to the disk are reduced, resulting in an increase of accuracy.

Further, the end of the head arm is often structured to make contact with the load ramp through a wiring gutter-shaped part located at the longitudinal opposite edges of the head arm. According to this structure, contact of the load ramp with the end of the head arm is provided in the form of line contact, resulting in a reduction in resistance to the head arm when moved along the support part of the load ramp.

A card-type magnetic recording device comprises a recording/reproducing head, a head arm of swing arm structure permitting swing motions about an axis of a base part, a motor for driving a disk serving as a recording medium for recording of information, a load ramp and an information processor.

The head arm makes movement between an access position adapted to locate the head on the surface area of the disk and a retreat position adapted to locate the head at a fixed position out of the surface area of the disk. The head arm has a shock-absorbing flat spring material (a gimbal spring) at its end and carries the head with the flat spring material. The base side of the above flat spring material is fixed to the head arm, and the end thereof is engaged with an engagement hole formed at the end of the head arm.

The load ramp is fixed to the retreat position of the head arm and has a support part for supporting the end of the head arm. The contact portion of the head arm with the load ramp is equivalent to a portion where the shock-absorbing flat spring material is fixed to the support spring.

Then, the support part of the load ramp is structured such that its surface at the side of the head arm end is inclined toward the base part of the head arm, thus permitting the contact portion of the head arm end with the support part to be brought closer to the base part of the head arm. According to this structure, a distance from the head mounting position to the contact portion of the head arm supported with the load ramp is increased in the retreat position. That is, the radius in elastic deformation of the shock-absorbing flat spring material in the thickness direction when shocked is made larger than that in case of forming the support surface in the flat shape, thus permitting enhancement of shock-absorption performance. The increase in radius as described above also permits less horizontal displacement (a reduction in displacement in a base part direction) of the head arm end at a time when the end of the flat spring material is pivoted within the range of the engagement hole, resulting in prevention of the end of the shock-absorbing flat spring material from being disengaged from the engagement hole at the head arm end when shocked.

### BRIEF DESCRIPTION OF THE DRAWINGS

Fig. 1 is an exploded view showing one preferred embodiment of a card-type magnetic recording device according to the present invention, together with a cartridge inserted into the magnetic recording device;
Fig. 2 is a view showing the inside of the card-type magnetic recording device of Fig. 1 with an upper cover removed;
Fig. 3 is a perspective view showing a head arm and a load ramp as components of the card-type magnetic recording device of Fig. 1;

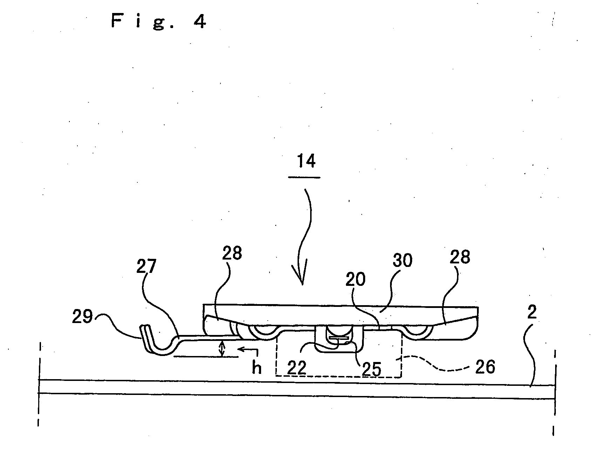

Fig. 4 is a view showing the head arm of Fig. 3 as seen from its end side (from a direction indicated by an arrow A of Fig. 3);
Fig. 5 is a view showing the load ramp of Fig. 3 as seen from a direction indicated by an arrow B of Fig. 3, and this load ramp supports the head arm (the head is in a retreat position);
Fig. 6 is a view showing the state of the head arm further advanced from the position of Fig. 5 toward a disk;
Fig. 7 is a view showing the state of access of the head to the disk in consequence of further advancement of the head arm from the position of Fig. 6 toward the disk; and
Fig. 8 is a view showing the load ramp of Fig. 3 as seen from the end side of a support part of the load ramp (from a direction indicated by an arrow C of Fig. 3).

### BEST MODE FOR EMBODYING THE INVENTION

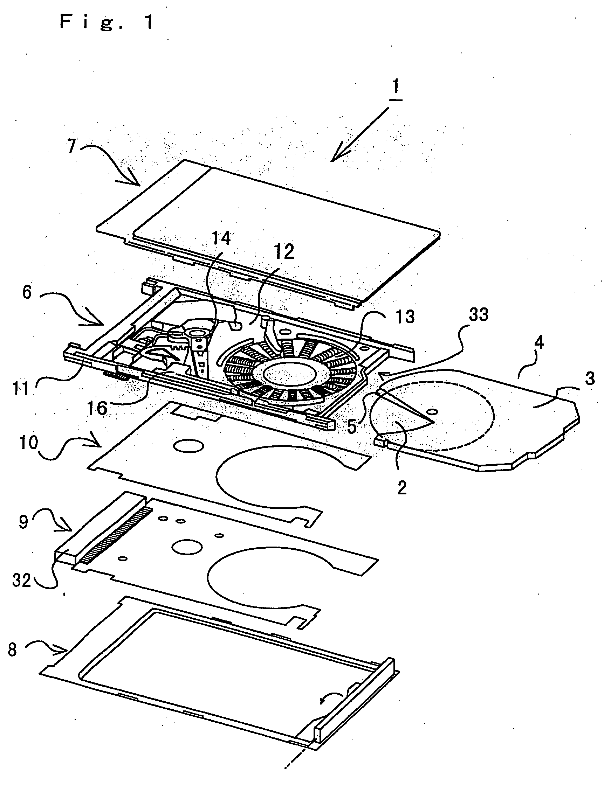

Fig. 1 shows a card-type magnetic recording device 1 based on PCMCIA standard Type II, together with a disk 2.

A disc-type magnetic recording medium (which will be hereinafter referred to as a disk) 2 is housed in a shell 3 to provide a cartridge 4. The shell 3 has a shutter 5. The shutter 5 is energized in a closing direction at all times, while being opened through the operation of loading the cartridge 4 into the magnetic recording device 1 through its insertion opening 33 (the shutter in the opened state is shown in Fig. 1).

The magnetic recording device 1 comprises a body 6, an upper cover 7, a lower cover 8 and an information processor 9. An insulating sheet 10 is disposed between the body 6 and the information processor 9.

Both the upper cover 7 and the lower cover 8 are formed by pressing a stainless-steel thin plate and are mounted to the upper and lower surfaces of the body 6 by engagement and bonding.

The body 6 is composed of a synthetic resin peripheral frame 11, a frame plate 12 outsert-molded together with the peripheral frame in one united body and various components mounted on the frame plate 12 such as a spindle motor 13, a head arm 14, a load ramp 15 and an ejector mechanism 16. The spindle motor 13 is to drive the disk 2.

The information processor 9 is configured by incorporating various elements and packages into a circuit substrate and has an input/output part for readout or writing of information from or to the disk 2, as well as processing of information and control of driving of the motor 13 and the head arm 14. The magnetic recording device 1 is connected to the information processor 9 through a connector 32.

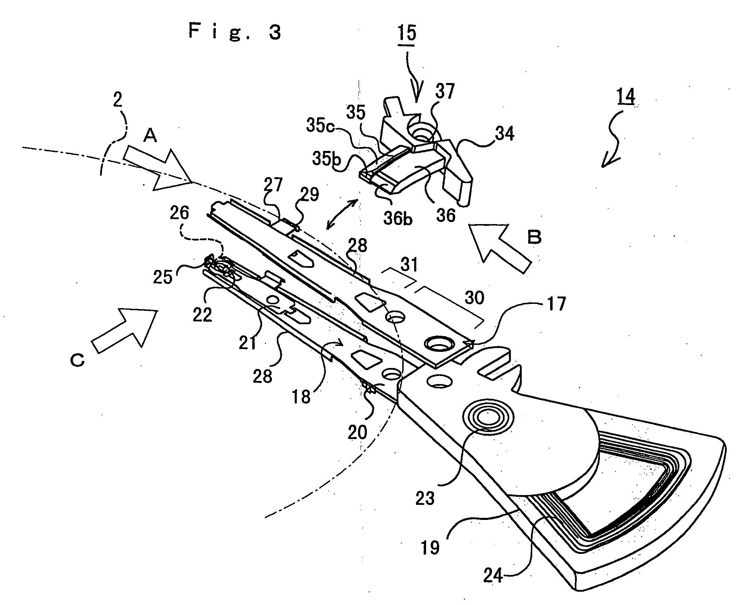

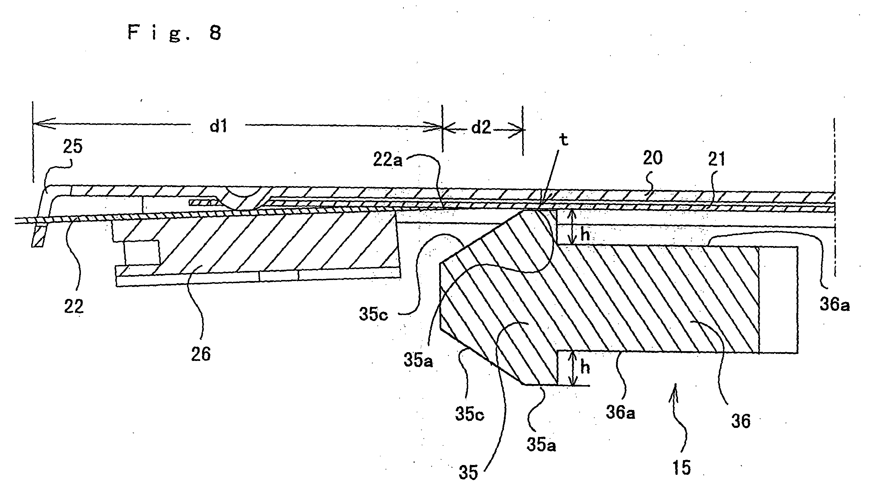

A description will now be given of the structure of the head arm 14 with reference to Figs. 3 and 8.

A base body 19 of the head arm 14 is provided as a hard resin molded product, which is mounted to the frame plate 12 so that it can rotate about an axis 23. The head arm 14 is composed of an upper arm 17 and a lower arm 18, which are fixed to the base body 19 in face-to-face arrangement. Thus, the upper and lower arms 17 and 18 are pivoted simultaneously about the axis 23 of the base body 19 for readout or writing of information from or to the opposite surfaces of the disk 2.

The base body 19 further has a drive coil 24. The drive coil 24 is adapted to drive the head for movement to an access position, and movement of the head from the access position to the retreat position is made by utilizing elasticity of a return spring (not shown). A spring of the ejector mechanism is also used for the return spring.

The upper arm 17 and the lower arm 18 are of the same structure. As shown in Fig. 8, each of the arms 17 and 18 is composed of a body spring 20, a support spring 21 and a gimbal part 22.

The body spring 20 is formed by pressing a stainless steel thin plate into a substantially flat elongate plate having an elastic bending part 31 (see Fig. 3) at its intermediate portion, and the rear end of the body spring is fixed to the base body 19.

The support spring 21 is mounted to a front portion of the body spring 20 so as to permit lift-up of its longitudinal end side. Further, the end of the support spring 21 is punched with a press to provide the gimbal part 22. The gimbal part 22 has a projecting end inserted into an engagement hole 25 formed at the end of the body spring 20.

A magnetic recording/reproducing head (which will be hereinafter referred to as a head) 26 is bonded to an intermediate portion of the gimbal part 22.

As shown in Fig. 3, the body spring 20 has a guide arm 27 projecting (toward the location of the load ramp which will be explained later) from the side edge on the side opposite to the disk at a position substantially intermediate in the longitudinal direction (a position at a short distance from the head 26 mounting position toward the base body 19).

The projection length of the guide arm 27 is about half of the width of the body spring 20 in the vicinity of the base of the guide arm 27.

As shown in Fig. 3, the body spring 20 has a gutter-shaped part 28 bent in the shape of letter U in section at the left and right side edges of a portion extending from the end to the elastic bending part 31 (which will be described later). Further, the projecting edge of the guide arm 27 is also bent in the shape of U letter in section to provider a slide contact part 29 at its bottom. Then, a difference h in altitude is provided between the bottom surface of the gutter-shaped part 28 of the body spring and the slide contact part 29 of the guide arm 27 such that the slide contact part 29 of the guide arm 27 is located lower than the bottom surface of the gutter-shaped part 28 of the body spring, that is, closer to the surface of the disk 2.

A description will now be given of the structure of the load ramp with reference to Fig. 3.

The load ramp 15 is provided as a hard plastic molded product having a mounting part 34, a support part 35 and a rail part 36 in one united body.

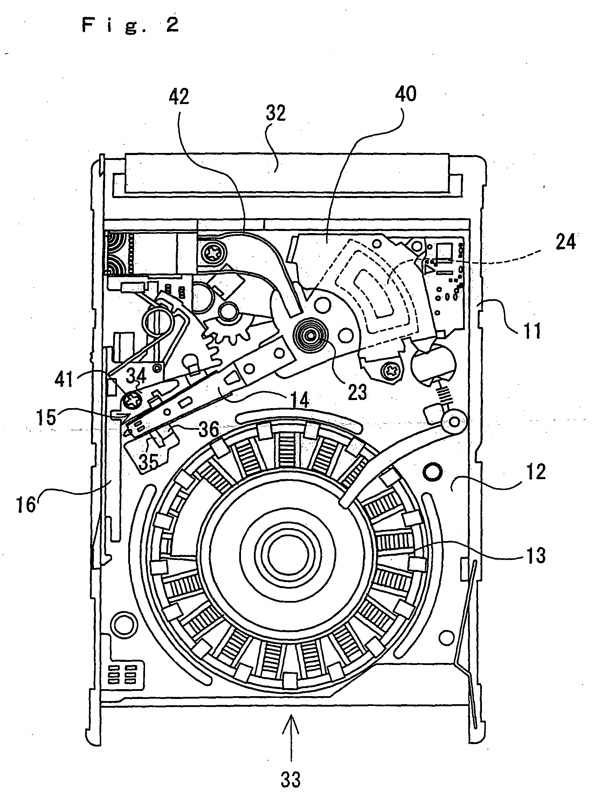

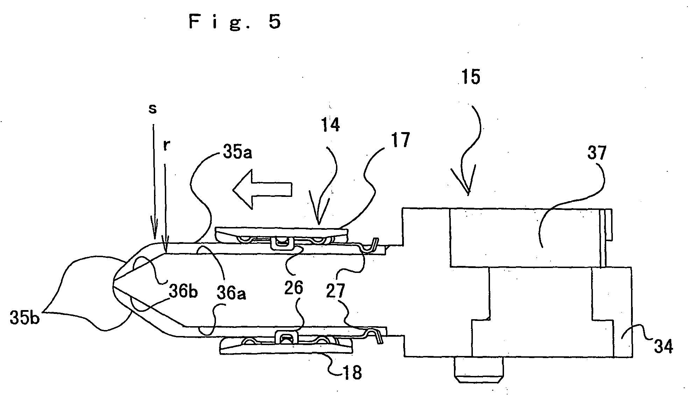

The mounting part 34 has a tapped hole 37, and the load ramp 15 is fixed to the frame plate 12 by fitting a screw into the tapped hole 37, as shown in Fig. 2. The support part 35 and the rail part 36 have a vertically symmetrical shape in cross section, as shown in Figs. 5 to 7.

As shown in Fig. 5, the support part 35 supports the ends of the arms 17 and 18 (more specifically, each fixed portion 22a at the rear end of the gimbal part 22 in the vicinity of the support spring 21) with the upper and lower surfaces 35a. The elasticity of the elastic bending parts 31 in the center of the body springs 20 permits the upper and lower arms 17 and 18 to put the upper and lower surfaces 35a of the support part 35 therebetween with predetermined force.

On the other hand, the rail part 36 supports the slide contact part 29 at the end of the guide arm 27 projecting from the body spring 20 sideways with the upper and lower surfaces 36a. That is, in movement of the arms 17 and 18, the slide contact parts 29 of the guide arms 27 slide on the surfaces 36a of the rail part 36.

The surface 36a of the rail part 36 to support the guide arms 27 is located lower than the surface 35a of the support part 35 to support the upper and lower arms 17 and 18 by a distance equivalent to the difference h in altitude between the bottom surface of the gutter-shaped part 28 of the body spring 20 and the slide contact part 29 of the guide arm 27 (see Fig. 8).

Further, the support part 36and the rail part 36 of the load ramp 15 is formed such that their opposite side edges take the shape of a circular arc centering on the axis 23 for axially supporting the head arm 14, when the load ramp 15 is fixed to the frame plate 12 as shown in Fig. 2. The rail part 36 extends longer than the support part 35 into the mounting part 34 inwardly. The length of inward extension of the rail part is approximately equal to the length of the guide arm 27 projecting from the side edge of the body spring 20 sideways.

As shown in Fig. 5, the upper and lower surfaces of the longitudinal ends (the ends opposite to the mounting part 34) of the support part 36 and the rail part 36 are formed in the shape of taper surfaces 35b, 36b of a thickness reduced gradually toward the ends. Since an angle formed by the upper and lower taper surfaces 35a of the support part 35 is greater than an angle formed by the upper and lower taper surfaces 36b of the rail part 36, a boundary s between the arm support surface 35a and the taper surface 35b of the support part 35 is located more distant from the load ramp mounting part 34 than a boundary r between the guide arm support surface 36a and the taper surface 36b of the rail part 36, as shown in Fig. 5.

Further, the upper and lower surfaces of the front side end of the support part 35 are formed in the shape of taper surfaces 35c of a thickness reduced gradually toward the front end, as shown in Fig. 8. Thus, each of the surfaces 35a to support the arms 17 and 18 (the gimbal parts 22 thereof in more detail) is cut down into a narrower surface by a portion corresponding to the taper surface 35c (a distance d2 of Fig. 8). As a result, the distance from the ends of the arms 17 and 18 (each engagement hole 25 at the end of the body spring 20 in more detail) to the contact position t on the support surface 35a of the support part 35 to support the arms is expressed by d1 + d2 (If the front side end of the support part 35 has no taper surface 35c, the distance from the end of each of the upper and lower arms 17 and 18 to each arm support surface 35a is expressed by d1.)

When the head arm 14 is in the retreat position, the upper and lower arms 17 and 18 are located on the support surfaces 35a of the support part 35 in proximity to the mounting part 34, and the guide arms 27 of the upper and lower arms are located on the guide arm support surfaces 35a of the rail part 36 in proximity to the mounting part 34.

A description will now be given of the procedure of mounting the load ramp 15 described above to the frame plate 12 with reference to Fig. 2.

Firstly, the spindle motor 13 is incorporated into the frame plate 12. Secondly, the head arm 14 is mounted to the frame plate 12 such that the frame plate 12 can rotate about the axis 23. The drive coil 24 of the head arm 14 is arranged in a magnetic field of a yoke 40. Further, the load ramp 15 is fixed to the frame plate in a position corresponding to the head arm14 positioned in the retreat position by fitting a screw 41 into the tapped hole 37 of the mounting part 34. Subsequently, the head 26 fixed to the head arm 14 is connected to the input/output part of the information processor 9 arranged on the surface opposite to the frame plate 12 through a FPC 42.

Insertion of the cartridge 4 into the magnetic recording device 1 through the insertion opening 33 permits the shutter 5 of the shell 3 to be opened through the motion of the cartridge 4 when inserted. The shell 3 is located on the upper surface of the spindle motor 13, and the disk 2 housedaherein is driyen with the motor 13. Then, the head arm 14 is pivoted about the axis 23 from the retreat position to the access position for readout or writing of information from or to the disk 2.

On termination of readout or writing of information from or to the disk 2, the head arm 14 starts movement toward the load ramp 15. Then, the head arm 14 comes to the retreat position, where the upper and lower arms 17 and 18 are put on the support surfaces 35a of the support part 35, and the guide arms 27 are put on the guide arm support surfaces 35a of the rail part 36, and goes into the standby state at the retreat position.

A description will now be given of the operation from disengagement of the head arm 14 (the upper and lower arms 17 and 18) being in the retreat position from the load ramp 15 till placement of the head arm on the disk 2 with reference to Figs. 5 to 7.

Fig. 5 shows the state of the head arm 14 being in the retreat position where the head arm is engaged with the load ramp 15. The load ramp 15 is located on the side of the disk 2 (not shown in Fig. 5) at slight distance from the disk 2.

When the head arm 14 is in the retreat position, the ends of the upper and lower arms 17 and 18 are supported with the support surfaces 35a of the support part 35 of the load ramp 15, and the guide arms 27 projecting from the upper and lower arms 17 and 18 sideways are supported with the support surfaces 36a of the rail part 36. Thus, the distance between the heads 26 mounted closer to the ends of the arms 17 and 18 than the projecting positions of the guide arms 27 is increased.

Further, the ends of the upper and lower arms 17 and 18 positioned in the retreat position are put on the support surfaces 35a of the support part 35 of the load ramp 15 with the elastic bending parts 31 of the body springs 20 bent. Thus, since the ends of the arms 17 and 18 exert repulsive force to press the support surfaces 35a of the support part 35 of the load ramp 15 with predetermined force at all times, the arms 17 and 18 are placed in the retreat position in a stable state. If harmful vibrations or shocks are applied to the heads 26, it is not feared that the end of each gimbal part is disengaged from the load ramp 15.

Incidentally, in the upper and lower arms 17 and 18, the portions having the gutter-shaped parts 28 at the opposite sides are hard to be bent structurally, while the portions having the elastic bending parts 31, having no gutter-shaped parts 28 at the opposite sides, are solely subjected to bending when the ends of the upper and lower arms 17 and 18 are engaged with the load ramp 15.

Incidentally, the gutter-shaped parts 28 may be also used for arrangement of wires serving as lead wires leading to the heads 26.

The distance d1 + d2 from the ends (the engagement holes 25 of the body springs), of the arms 17 and 18 to the contact positions t on the arm support surfaces 35a of the support part 35 to support the arms is set to be longer. Thus, if vibrations and shocks are applied to the upper and lower arms 17 and 18 positioned in the retreat position, as far as they are within a normal range, such vibrations and shocks can easily be alleviated in comparison with the case where the above distance is set to be shorter (d1). Accordingly, even if each gimbal part 22 where the head 26 is mounted is deformed to be bent in a direction perpendicular to the surface of the gimbal part, the shocks by deformation can easily be absorbed, and displacement of the gimbal parts 22 by deformation can also be reduced, resulting in that the end of each gimbal part 22 is not disengaged from the engagement hole 25 at the end of the body spring 20.

Incidentally, the taper surfaces 35c at the front side end of the support part 35 perform the functions of supporting the upper and lower arms 17 and 18 deformed by elasticity in extraordinary intensive vibrations and shocks, resulting in prevention of any further deformation.

Since the vibrations and shocks applied to the end of the head arm 14 are reduced as described above, application of shocks to the head arm 14 to some extent would cause neither damages to the heads 26 nor disengagement of the end of each gimbal part 22 (the shock-absorbing flat spring material) from the engagement hole at the end of the head arm. As a result, it is possible to offer a card-type magnetic recording device, which is resistant to shocks and permits stable operation.

When a drive signal is outputted from the information processor 9 to the head arm 14 positioned in the retreat position, the head arm 14 is pivoted about the axis 23 to start movement from the retreat position of Fig. 5 toward the disk access position.

Then, the upper and lower arms 17 and 18 are moved toward the end of the support part 35 (toward the disk 2) with the ends thereof kept supported with the upper and lower support surfaces 35a of the support part 35 of the load ramp 15. While the upper and lower arms 17 and 18 are sliding on the support surfaces 35a of the support part 35, the heads 26 carried by the upper and lower arms 17 and 18 are hindered by the support part 35 from coming close to each other.

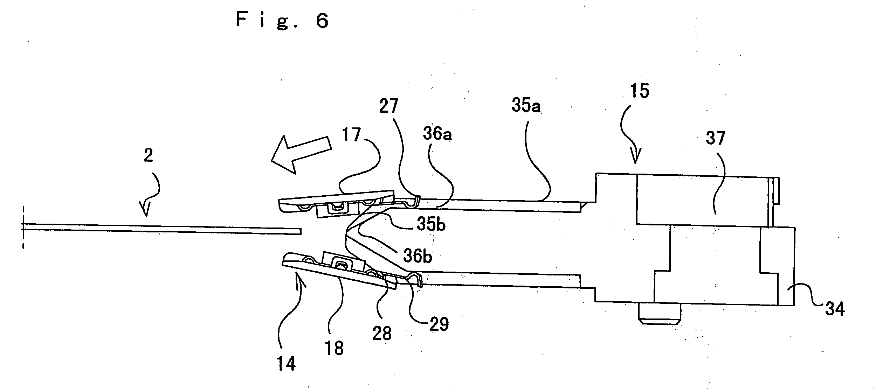

Fig. 6 shows the state where the upper and lower arms 17 and 18 have moved a little from the position of Fig. 5 toward the disk, in which the side edges on the side opposite to the load ramp mounting part 34 have left the support surfaces 35a of the support part 35 of the load ramp 15, while the side edges on the side of the load ramp mounting part 34 are going to leave the support surfaces 35a. The arms 17 and 18 in this state come up to a space between the disk 2 and the load ramp 15. In this place, the guide arms 27 projecting frorn the upper and lower arms 17 and 18 sideways (toward the load ramp mounting part 34) are being still supported with the support surfaces 36a of the rail part 36 of the load ramp 15.

When the arms 17 and 18 are placed in the state shown in Fig. 6, the body spring 20 is subjected to bending at the elastic bending part 31 to permit these arms 17 and 18 to be inclined as shown in Fig. 6.

Even when the side edges of the arms 17 and 18 (the gutter-shaped parts 28) on the side of the load ramp mounting part 34 begin to leave the support surfaces 35a of the support part 35 of the load ramp 15 in consequence of advancement of the arms further from the position of Fig. 6 toward the disk, the guide arms 27 are still supported with the support surfaces 36a or the taper surfaces 36b of the rail part 36 of the load ramp 15, resulting in no possibility that the arms 17 and 18 may fall in a gap between the load ramp 15 and the disk 2.

Further, since the guide arms 27 are provided on the arms 17 and 18 at a position at a short distance from the end toward the intermediate portion (or toward the axis 23) in the longitude direction, the distance from the projecting portions of the guide arms 27 to the elastic bending parts 31 in the arms 17 and 18 is shorter than the distance from the contact portions of the arms 17 and 18 with the support part 35 to the elastic bending parts 31. As a result, the guide arms 27 permit the upper and lower arms 17 and 18 whose ends can be opened by upward and downward deformation about the location of the elastic bending parts 31 to be opened at a larger angle, in comparison with the case where the arms are opened by contact of the head arm 14 with the support part 35. Thus, the guide arms 27, provided on the arms 17 and 18 at a position at a short distance from the end toward the intermediate portion (or toward the axis 23) in the longitude direction, greatly function to maintain the heads 26, 26 on the arm ends at the isolation positions permitting no contact of the heads with the disk 2.

Further, since the boundary s between the support surface 35a of the support part 35 and the taper surface 35b at the end of the support part 35 is located more distant from the load ramp mounting part 34 than the boundary r between the support surface 36a of the rail part 36 and the taper surface 36b at the end of the rail part 36, the support surfaces 35a of the support part 35 make it possible to maintain the head arm ends higher for a longer period of time. As a result, there is accordingly less possibility that the end of the head arm 14 may fall in the gap between the load ramp 15 and the disk 2.

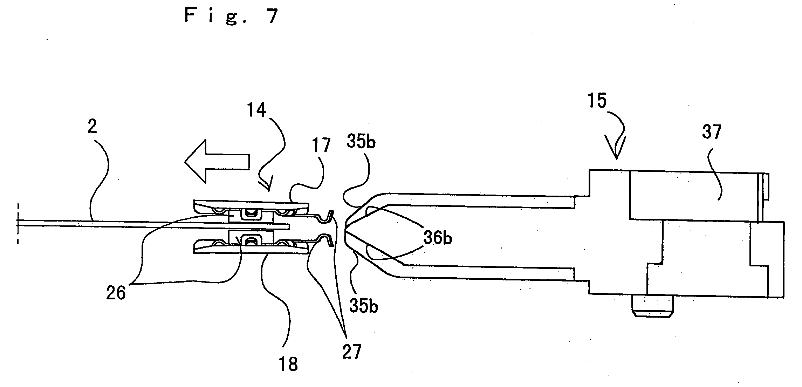

With the advancement of the upper and lower arms 17 and 18 further from the position of Fig. 6 toward the disk, the arms 17 and 18 are disengaged from the load ramp 15. Fig. 7 shows the state, in which the heads 26 mounted to the upper and lower arms 17 and 18 gain access to the opposite surfaces of the disk 2 in consequence of the advancement of the arms 17 and 18 toward the disk.

As described above, when the ends of the upper and lower arms 17 and 18 slide on the support surfaces 35a of the support part 35 of the load ramp 15 toward the disk 2, or the upper and lower arms 17 and 18 positioned in the disk access position slide on the support surfaces 35a of the support part 35 from the disk toward the retreat position, the guide arms integral with the upper and lower arms 17 and 18 function as a guide for movement of the arms 17 and 18 by sliding on the support surfaces 36a of the rail part 36 of the load ramp 15.

On termination of readout or writing of information from or to the opposite surfaces of the disk 2 by the heads 26 of the upper and lower arms 17 and 18 in an access position, excitation of the drive coil 24 is released to return the arms 17 and 18 to the retreat position by the action of the return spring. In this place, the guide arms 27 of the upper and lower arms 17 and 18 firstly come into contact with the load ramp 15, and the slide contact parts 29 slide upward on the taper surfaces 36b at the end of the rail part 36.

As shown in Fig. 5, since the inclination angle of each taper surface 36b is relatively more gentle than that of each taper surface 35b of the support part 35, the guide arms 27 may slide upward smoothly on the taper surfaces 36b. Then, the ends of the upper and lower arms 17 and 18 are slightly opened with the increasing distance (thickness) between the upper and lower taper surfaces 36b, and in this state, the side edges (the gutter-shaped parts 28) of the upper and lower arms 17 and 18 on the side opposite to the disk make contact with the taper surfaces 35b of the support part 35.

Since the guide arms 27 are of small width and are located close to the axis 23 about which the guide arms 27 rotate so that the force of the return spring is made strong, the slide contact parts 29 at the ends of the guide arms 27 can easily to ride onto the taper surfaces 36b of the rail part 36.

Further, when the gutter-shaped parts 28 in the side edges of the arms 17 and 18 which are moving toward the retreat position, on the side of the load ramp mounting part 34, make contact with the taper surfaces 35b of the support part 35, the ends of the upper and lower arms 17 and 18 are placed in the slightly opened state as described above and therefore, the subsequent riding of the gutter-shaped parts 28 of the upper and lower arms 17 and 18 onto the taper surfaces 35b of the support part 35 becomes easy.

As a result, the upper and lower arms 17 and 18 may be guided to the upper and lower support surfaces 35a of the support part 35 of the load ramp 15 smoothly, respectively, so that they are positioned in a retreat position stably.

The above description has been given of one embodiment, in which the guide means for guiding the end of the head arm 14 is composed of the part on the side of the head arm 14 and the part on the side of the load ramp 15. However, the guide means may be composed of a guide arm on the side of the head arm 14 and a cam surface provided on the side of the frame plate 12, with which the guide arm makes contact, or may be composed of a part on the side of the head arm 14.

## Claims

1. A card-type magnetic recording device comprising:
a head arm which carries a magnetic recording/reproducing head carried;
a motor for driving to revolve a disk which serves as a recording medium for recording of information;
a load ramp permitting to place said head on standby after retreat of the head from the surface area of the disk; and
an information processor:
wherein said head arm is formed in the shape of a flat plate and adopts a swing arm structure permitting swing motions about an axis in the base part; and
said load ramp is arranged at a distance from the peripheral edge of the disk.

2. A card-type magnetic recording device according to claim 1, further comprising guide means for guiding the end of said head arm from said load ramp toward the surface area of the disk and also in the reverse direction.

3. A card-type magnetic recording device according to claim 2, wherein said guide means is provided on said head arm.

4. A card-type magnetic recording device according to claim 2, wherein said guide means is composed of a structure provided on the head arm and a structure provided on the side of the load ramp.

5. A card-type magnetic recording device comprising:
a head arm of swing arm structure, which carries a magnetic recording/reproducing head;
a motor for revolving a disk serving as a recording medium for recording/reproduction of information;
a load ramp permitting to place said head on standby after retreat of the head from the surface area of the disk;
an information processor; and
a guide arm provided on the head arm at a position at a distance from the end toward the intermediate position in the longitudinal direction in a manner such that it projects toward the side opposite to the disk;
wherein the projection end of said guide arm remains on the load ramp when the end of the head arm, which moves toward the disk, is disengaged from the load ramp, thus maintaining the head arm end at an isolation position where the head does not make contact with the disk within the disk surface area, during the time until the guide arm is disengaged from the load ramp.

6. A card-type magnetic recording device according to claim 5, wherein said load ramp has a support part for supporting the end of the head arm and a rail part for supporting the end of the guide arm, and each of the ends of the support part and the rail part on the side of the disk is formed in the shape of a taper surface of a thickness gradually reduced toward the disk.

7. A card-type magnetic recording device according to claim 6, wherein the surface, which serves as the head arm end, of the support part is inclined toward the base part of the head arm to bring a contact portion of the head arm end with the support part closer to the base part of the head arm.

8. A card-type magnetic recording device according to claim 6, wherein the taper surface in said support part begins at position closer to the disk side than the taper surface of the rail part.

9. A card-type magnetic recording device according to claim 6 or 8, wherein the projection end of the guide arm is located closer to the inner side of the head arm than the end of the head arm while maintaining a difference in altitude, and the rail part and the support part are formed to maintain the same difference in altitude as the above difference.

10. A card-type magnetic recording device according to claim 5, wherein a part of the opposite edges of the head arm in a longitudinal direction are bent in the shape of letter U in section, and a lead wire is housed in the bent portion.

11. A card-type magnetic recording device according to claim 5, wherein the head arm has a support spring whose end is formed in the shape of a gimbal part, the head is carried on the gimbal part, and the end of the gimbal part is engaged with an engagement hole formed at the end of the head arm.
